# EUROPÄISCHE PATENTANMELDUNG

(11) **EP 1 207 299 A2**
(43) Veröffentlichungstag der Anmeldung: **22.05.2002**
(21) Anmeldenummer: 01126249.0
(22) Anmeldetag: 05.11.2001
(51) Int. Cl.: F03D 11/00, F16C 32/04

(54) **Windkraftanlage mit Magnetlager**

(30) Priorität: 10.11.2000 DE 10055803
(71) Anmelder: Hennchen, Norbert, 29664 Walsrode (DE)
(72) Erfinder: Hennchen, Norbert, 29664 Walsrode (DE)
(74) Vertreter: Braun, Dieter, Dipl.-Ing.

(57) **Zusammenfassung**

Die Erfindung betrifft eine Windkraftanlage (1), deren Rotor (4) vorderseitig eine Nabe (5) mit Rotorblättern (6) trägt. Anstelle einer konventionellen mechanischen Lagerung hat die Windkraftanlage (1) eine Einrichtung (7), durch die ein magnetisches Feld aufgebaut wird. Hierdurch kann der Rotor (4) berührungslos in seiner vorbestimmten Position gehalten werden. Neben dem erhöhten Wirkungsgrad, aufgrund des entfallenden Reibungswiderstandes, wird auch die Lebensdauer der Windkraftanlage (1) wesentlich gesteigert. Durch eine geeignete Ansteuerung der Einrichtung (7) ist es zudem möglich, eine axiale oder radiale Korrektur der durch Abstandssensoren (12, 13) erfaßten Position des Rotors (4) vorzunehmen und wahlweise eine Dämpfung oder Verzögerung des Rotors (4) bei unerwünschten äußeren Krafteinwirkungen vorzunehmen.

## Beschreibung

Die Erfindung betrifft eine Windkraftanlage mit einem mehrere Rotorblätter aufweisenden Rotor, welcher mittels einer Lagerung in einem Gehäuse drehbeweglich angeordnet ist, und mit einem Generator, zur Erzeugung elektrischer Energie.

Eine solche Windkraftanlage wird bereits seit einigen Jahren in der Praxis eingesetzt und gehört damit durch offenkundige Vorbenutzung zum Stand der Technik. Als alternative Energiequelle haben sich solche Windkraftanlagen inzwischen etablieren können, wobei zunehmend der Wunsch nach höheren Leistungen besteht. Während vergleichsweise kleine Anlagen inzwischen durch ihre Serienfertigung einen hohen Grad an Zuverlässigkeit erreicht haben, stehen hierzu Erfahrungswerte für große Anlagen mit einer Leistung über 1 MW noch aus, da solche Anlagen erst seit wenigen Jahren betrieben werden.

Die Belastungen der mechanischen Komponenten der großen Windkraftanlagen, insbesondere der Rotorblätter, Lager, Getriebe sowie Generatoren, sind dabei sehr hoch. So wird sich die Haltbarkeit der Windkraftanlage, die auf eine Betriebsdauer von 20 Jahren ausgelegt ist, erst in Zukunft bestätigen.

Da der Reparaturaufwand bei einem aufgetretenen Schaden der Lagerung außerordentlich hoch ist, sind für Windkraftanlagen spezielle Lagerungskonzepte erarbeitet worden. So wird in einer Pressemitteilung der SKF Österreich AG, veröffentlicht unter der Internetadresse http://www.skf.at/pressemitteilungen/km773.htm, eine eigens zu diesem Zweck entwickelte Lagerung vorgestellt, die aus einem zweireihigen Kegelrollenlager als Festlager mit integrierter Dichtungslauffläche am Innenring und einem einreihigen Zylinderrollenlager auf der Loslagerseite besteht. Dabei wurde der Bauraum zwischen den Lagern als Stauraum für Schmiermittel genutzt, so daß ein Service lediglich einmal jährlich erforderlich sein soll.

Eine Möglichkeit für eine Fehlerfrüherkennung zur Vermeidung hoher Ausfallkosten einer Windkraftanlage wird unter der Internetadresse http://www.iset.unikassel.de/projekte/95/wind/w1.html aufgezeigt. Dabei werden die prinzipiellen Fehlerquellen in den wesentlichen Windkraftanlagen-Komponenten (Rotor, Antriebsstrang) als Ermüdung, Abnutzung sowie Lockerung identifiziert. Das beschriebene Verfahren stützt sich dabei auf Schwingungsmeßsignale, z. B. von Körperschallsensoren. Beispielsweise können sich bei Wälzlagern als Folge der Abnutzung auch als Folge eines Stromdurchganges bei Blitzschlag Unebenheiten in den Lagerschalen bilden, die zu Stoßimpulsen mit einer charakteristischen Frequenz führen und so frühzeitig erkennbar sind.

Als problematisch erweist sich in der Praxis, daß der Wartungs- und Instandhaltungsaufwand für die Windkraftanlage vergleichsweise hoch und damit im Hinblick auf die Wirtschaftlichkeit nachteilig ist. Insbesondere bei schlecht zugänglichen Standorten erweist sich ein Wartungszyklus von einem Jahr als sehr kostenintensiv.

Der Erfindung liegt die Aufgabe zugrunde, eine Windkraftanlage der eingangs genannten Art derart auszuführen, daß dadurch die erwartete Lebensdauer der Windkraftanlage verlängert und der Wartungs- und Instandhaltungsaufwand verringert werden kann.

Diese Aufgabe wird erfindungsgemäß mit einer Windkraftanlage gemäß den Merkmalen des Patentanspruchs 1 gelöst. Die weitere Ausgestaltung der Erfindung ist den Unteransprüchen zu entnehmen.

Erfindungsgemäß ist also eine Windkraftanlage vorgesehen, bei der die Lagerung der Windkraftanlage durch eine Einrichtung zur Erzeugung eines magnetischen Feldes gebildet ist, durch die der Rotor in der vorbestimmten Position drehbeweglich geführt ist. Hierdurch kann auf eine mechanische Lagerung, insbesondere auf ein Wälzlager, verzichtet werden, so daß ein verschleißbedingtes Ausfallrisiko im wesentlichen entfällt. Zugleich werden durch die so geschaffene, berührungslose Lagerung insbesondere auch Reibungsverluste ausgeschlossen, so daß der Wirkungsgrad der erfindungsgemäßen Windkraftanlage deutlich verbessert wird. Zugleich läßt sich dadurch die erwartungsgemäße Lebensdauer der Windkraftanlage verlängern, was ebenfalls zu einer erhöhten Wirtschaftlichkeit beim Betrieb der Windkraftanlage führt. Weiterhin eignet sich die Windkraftanlage dadurch auch für den Einsatz in entlegenen oder schlecht zugänglichen Gebieten, wie beispielsweise im Meer (off-shore).

Besonders gut eignet sich auch eine Ausgestaltung der Erfindung, bei welcher durch die Einrichtung Anziehungs- oder Abstoßungskräfte auf den Rotor ausgeübt werden und dadurch der Rotor in der vorbestimmten Position gehalten wird. Hierdurch wird eine zuverlässige und exakte Positionierung des Rotors ermöglicht, die im Betrieb der Windkraftanlage zu einem hohen Maß an Gleichlauf mit geringen Sollwertabweichungen führt.

Hierbei ist eine besonders vorteilhafte Ausführungsform dadurch erreicht, daß die Einrichtung zur Festlegung der radialen Position des Rotors ausgeführt ist. Hierdurch kann der Rotor, unabhängig von seinem Eigengewicht oder die an den Rotorblättern angreifende Windkraft, in einer zentralen Position gehalten werden, so daß eine Beschädigung von weiteren Bauelementen der Windkraftanlage vermieden wird.

Ebenfalls besonders zweckmäßig ist es, wenn die Einrichtung zur Festlegung der axialen Position des Rotors ausgeführt ist. Auf diese Weise können auch solche Kräfte zuverlässig durch die Einrichtung aufgenommen werden, die in Achsrichtung des Rotors wirken.

Eine andere besonders praxisnahe Ausgestaltung der Erfindung wird dadurch geschaffen, daß die Einrichtung zur Erzeugung von zumindest zwei unabhängigen magnetischen Feldern ausgeführt ist, die auf jeweils einen Abschnitt des Rotors wirken. Hierdurch kann ein Abkippen des Rotors unter dem Einfluß äußerer Kräfte zuverlässig vermieden werden. Hierzu werden die einzelnen Felder unterschiedlich angesteuert, um so auch eine Veränderung des Neigungswinkels durch eine Schwenkbewegung um eine zu der Rotorachse senkrechte Achse zu ermöglichen.

Ebenfalls besonders zweckmäßig ist es auch, wenn die Einrichtung einen den Rotor einschließenden Stator aufweist, dessen Stromfluß zur Festlegung der Position des Rotors durch eine Steuereinheit festlegbar ist. Hierdurch kann die Richtung und die Größe des auf den Rotor einwirkenden magnetischen Feldes problemlos durch die entsprechende Veränderung des elektrischen Stromes erreicht werden. Auf zusätzliche verstellbare oder bewegliche mechanische Bauelemente kann dadurch verzichtet werden.

Hierzu ist auch besonders günstig, wenn durch die Steuereinheit eine an dem Rotor angreifende äußere Krafteinwirkung erfaßt und durch die Steuerung des Stromflusses eine Dämpfung erreichbar ist. Hierdurch führt eine ungleichmäßig an den Rotorblättern angreifende Windkraft nicht zu einer Schwingung, die eine hohe Belastung oder gar eine Beschädigung der Bauteile verursachen kann, sondern durch die Dämpfung wird eine schnelle Rückkehr des Rotors in seine vorbestimmte Position erreicht.

Zur Steuerung der Einrichtung können Kenngrößen herangezogen werden, die aus dem veränderten magnetischen oder elektrischen Feld bei der unerwünschten Verlagerung des Rotors ableitbar sind. Besonders zuverlässig ist jedoch auch eine Ausgestaltung der erfindungsgemäßen Windkraftanlage, bei der die Einrichtung mit Abstandssensoren zur Bestimmung der axialen oder radialen Abweichung von einem Sollwert ausgestattet ist. Hierdurch kann mittels der berührungslosen Sensoren unmittelbar die Abweichung von einem Sollwert gemessen und entsprechende Korrekturmaßnahmen eingeleitet werden. Dabei können die Abstandssensoren auch bei einem Stillstand der Windkraftanlage uneingeschränkt eingesetzt werden, so daß eine plötzliche Drehbewegung des Rotors nicht zu einer Beschädigung der Windkraftanlage führen kann.

Die Zentrierung des Rotors kann ausschließlich mittels des steuerbaren magnetischen Feldes erreicht werden. Besonders sinnvoll ist es hingegen auch, wenn die Einrichtung ein permanentmagnetisches Hilfslager zur Unterstützung der Positionierung aufweist. Hierdurch wird bereits durch das permanentmagnetische Hilfslager ein wesentlicher Anteil der erforderlichen Energie für die Zentrierung des Rotors aufgebracht. Das steuerbare magnetische Feld wird daher lediglich zur Korrektur eingesetzt, so daß die Windkraftanlage einen geringen Eigenenergieverbrauch aufweist.

Die Einrichtung kann als ein separates Bauteil der Windkraftanlage vorgesehen werden. Besonders günstig ist hingegen der Aufbau der Windkraftanlage, wenn die Einrichtung zugleich als der zur Stromerzeugung einsetzbare Generator ausgeführt ist. Hierdurch können die durch den Generator ohnehin vorhandenen Bauelemente, wie insbesondere der Permanentmagnetrotor und ein diesen umgebender Stator, zur Erzeugung des magnetischen Feldes eingesetzt werden. Die Windkraftanlage läßt sich dadurch mit geringem Aufwand herstellen, wobei zugleich die äußeren Abmessungen sowie das Gewicht vermindert werden können.

Eine weitere besonders vorteilhafte Abwandlung der vorliegenden Erfindung wird dadurch erreicht, daß mittels der Einrichtung der Rotor, insbesondere zum Erreichen einer Ruheposition, axial in eine Aufnahme beweglich ist. Hierdurch wird der Rotor bei Nichtgebrauch lediglich axial verschoben und gelangt so in die Aufnahme, gegen die der Rotor dadurch anliegt. Der Rotor liegt daher in seiner Ruheposition nicht auf einem den Rotor umgebenen Stator auf, sondern wird durch die Aufnahme in einer zentrierten Position gehalten.

Hierbei ist es besonders zweckmäßig, wenn die Einrichtung für die axiale Bewegung des Rotors einen Permanentmagneten aufweist. Auf diese Weise gelangt der Rotor auch bei einem Ausfall der Anlage, beispielsweise einem Stromausfall oder dem Ausfall der Steuerung, in die Ruheposition, so daß es auch bei einem plötzlichen Ausfall während des Betriebes nicht zu einer Beschädigung der Windkraftanlage führt.

Die Erfindung läßt verschiedene Ausführungsformen zu. Zur weiteren Verdeutlichung ihres Grundprinzips sind drei davon in der Zeichnung dargestellt und werden nachfolgend beschrieben. Diese zeigt jeweils in einer geschnittenen Seitenansicht in
- Fig.1: eine andere erfindungsgemäße Windkraftanlage;
- Fig.2: eine weitere Windkraftanlage mit einer für die Ruheposition vorgesehenen Aufnahme;
- Fig.3: eine weitere lediglich abschnittsweise dargestellte Windkraftanlage, in einer vergrößerten Ansicht.

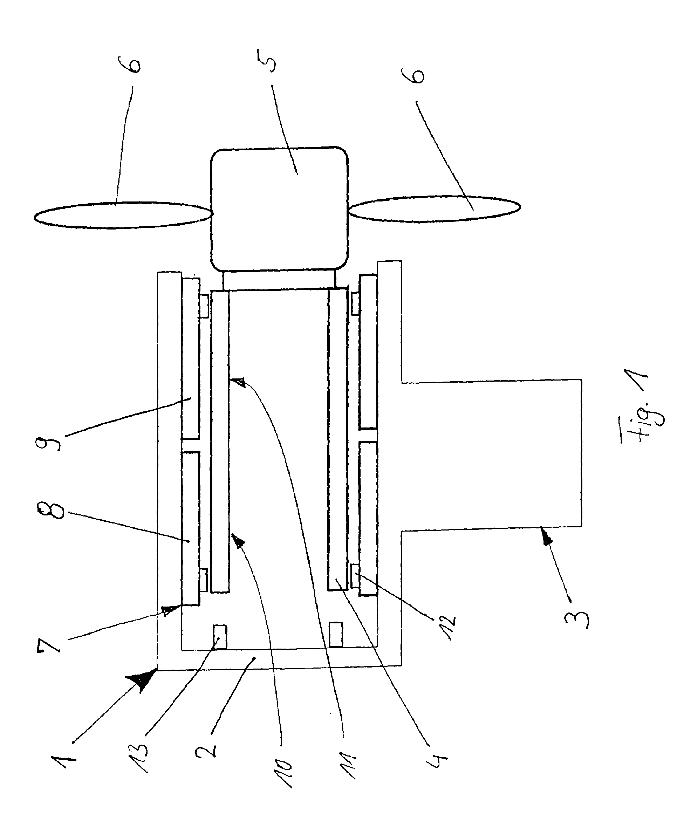

Figur 1 zeigt eine geschnittene Seitenansicht einer erfindungsgemäßen Windkraftanlage 1 mit einem Gehäuse 2 und einem Turmanschluß 3. In dem Gehäuse 2 ist ein Rotor 4 drehbeweglich angeordnet, dessen Nabe 5 mehrere Rotorblätter 6 trägt. Zur Vermeidung einer mechanischen Lagerung ist die Windkraftanlage 1 mit einer Einrichtung 7 ausgestattet, durch die der Rotor 4 berührungslos in seiner vorbestimmten zentrierten Position gehalten wird. Hierzu hat die Einrichtung 7 zwei Statoren 8, 9, die auf jeweils einen Abschnitt 10, 11 des Rotors 4 wirken. Durch eine entsprechende Steuerung des Stromflusses in den Statoren 8, 9 wird zudem eine berührungslose Verlagerung des Rotors 4 ermöglicht, um so beispielsweise eine Dämpfung von äußeren Krafteinwirkungen zu realisieren. Zur Bestimmung der genauen Position des Rotors 4 ist die Einrichtung 7 mit verschiedenen berührungslosen Abstandssensoren 12, 13 ausgestattet, die jeweils die radiale oder die axiale Position des Rotors 4 erfassen.

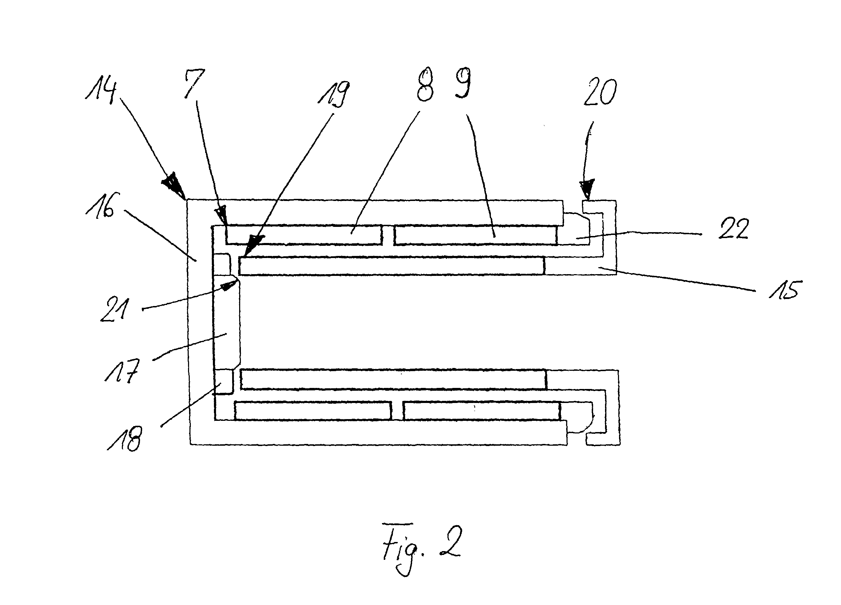

Figur 2 zeigt eine weitere Windkraftanlage 14, bei der auf die Darstellung von Rotorblättern eines Rotors 15 zur besseren Übersicht verzichtet wurde. Zusätzlich zu der übereinstimmend in Figur 1 gezeigten Einrichtung 7, zur Erzeugung des magnetischen Feldes, ist ein Gehäuse 16 bei dieser Ausführungsform der Windkraftanlage 14 mit einer Aufnahme 17 ausgestattet, die es ermöglicht, den Rotor 15 in seiner Ruheposition ohne Berührung der Statoren 8, 9 in einer zentrierten Position zu halten. Hierzu wird der Rotor 15 mit Hilfe eines Permantenmagneten 18 axial in die dargestellte rückwärtige Position bewegt, in welche der Rotor 15 mit seinen äußeren Randabschnitten 19, 20 gegen jeweils eine Auflagefläche 21, 22 der Aufnahme 17 anliegt. Die dargestellte Position wird mittels des Permanentmagneten 18 auch bei einem Stromausfall zuverlässig erreicht, so daß Schäden wirkungsvoll vermieden werden.

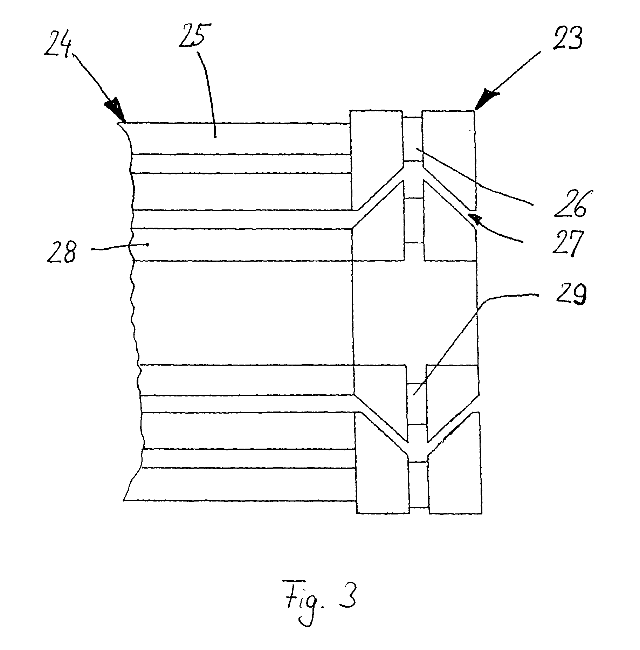

Abschließend zeigt Figur 3 ein ergänzendes permanentmagnetisches Hilfslager 23 für eine weitere Windkraftanlage 24. Das Hilfslager 23 weist hierzu einerseits einen an einem Gehäuse 25 der Windkraftanlage 24 unbeweglich fixierten, im wesentlichen ringförmigen Magneten 26 mit einer umlaufenden Nut 27, andererseits einen mit einem Rotor 28 verbundenen, weiteren Magneten 29 auf, der mit geringem Abstand in der Nut 27 beweglich angeordnet ist. Hierdurch wird eine in axialer sowie radialer Richtung selbst zentrierende Anordnung geschaffen, so daß durch die in den Figuren 2 und 3 gezeigte Einrichtung 7 lediglich eine geringfügige Korrektur vorgenommen werden muß. Der Energieverbrauch der so ausgestatteten Windkraftanlage 24 kann daher weiter gesenkt und damit der Gesamtwirkungsgrad gesteigert werden.

## Patentansprüche

1. Windkraftanlage (1, 14, 24) mit einem mehrere Rotorblätter (6) aufweisenden Rotor (4, 15, 28), welcher mittels einer Lagerung in einem Gehäuse (2, 16, 25) drehbeweglich angeordnet ist, und mit einem Generator zur Erzeugung elektrischer Energie, **dadurch gekennzeichnet, daß** die Lagerung der Windkraftanlage (1, 14, 24) durch eine Einrichtung (7) zur Erzeugung eines magnetischen Feldes gebildet ist, durch die der Rotor (4, 15, 28) in der vorbestimmten Position drehbeweglich geführt ist.

2. Windkraftanlage (1, 14, 24) nach Anspruch 1, **dadurch gekennzeichnet, daß** durch die Einrichtung (7) Anziehungs- oder Abstoßungskräfte auf den Rotor (4, 15, 28) ausgeübt werden.

3. Windkraftanlage (1, 14, 24) nach den Ansprüchen 1 oder 2, **dadurch gekennzeichnet, daß** die Einrichtung (7) zur Festlegung der radialen Position des Rotors (4, 15, 28) ausgeführt ist.

4. Windkraftanlage (1, 14, 24) nach zumindest einem der vorhergehenden Ansprüche, **dadurch gekennzeichnet, daß** die Einrichtung (7) zur Festlegung der axialen Position des Rotors (4, 15, 28) ausgeführt ist.

5. Windkraftanlage (1, 14, 24) nach zumindest einem der vorhergehenden Ansprüche, **dadurch gekennzeichnet, daß** die Einrichtung (7) zur Erzeugung von zumindest zwei unabhängigen magnetischen Feldern ausgeführt ist, die auf jeweils einen Abschnitt des Rotors (4, 15, 28) wirken.

6. Windkraftanlage (1, 14, 24) nach zumindest einem der vorhergehenden Ansprüche, **dadurch gekennzeichnet, daß** die Einrichtung (7) einen den Rotor (4, 15, 28) einschließenden Stator (8, 9) aufweist, dessen Stromfluß zur Festlegung der Position des Rotors (4, 15, 28) durch eine Steuereinheit festlegbar ist.

7. Windkraftanlage (1, 14, 24) nach zumindest einem der vorhergehenden Ansprüche, **dadurch gekennzeichnet, daß** durch die Steuereinheit eine an dem Rotor (4, 15, 28) angreifende äußere Krafteinwirkung erfaßt und durch die Steuerung des Stromflusses eine Dämpfung erreichbar ist.

8. Windkraftanlage (1) nach zumindest einem der vorhergehenden Ansprüche, **dadurch gekennzeichnet, daß** die Einrichtung mit Abstandssensoren (12, 13) zur Bestimmung der axialen oder radialen Abweichung von einem Sollwert ausgestattet ist.

9. Windkraftanlage (24) nach zumindest einem der vorhergehenden Ansprüche, **dadurch gekennzeichnet, daß** die Einrichtung (7) ein permanentmagnetisches Hilfslager (23) zur Unterstützung der Positionierung aufweist.

10. Windkraftanlage (1, 14, 24) nach zumindest einem der vorhergehenden Ansprüche, **dadurch gekennzeichnet, daß** die Einrichtung (7) zugleich als der zur Stromerzeugung einsetzbare Generator ausgeführt ist.

11. Windkraftanlage (24) nach zumindest einem der vorhergehenden Ansprüche, **dadurch gekennzeichnet, daß** mittels der Einrichtung der Rotor (15), insbesondere zum Erreichen einer Ruheposition, axial in eine Aufnahme (17) beweglich ist.

12. Windkraftanlage (24) nach zumindest einem der vorhergehenden Ansprüche, **dadurch gekennzeichnet, daß** die Einrichtung für die axiale Bewegung des Rotors (15) einen Permanentmagneten (18) aufweist.
